(19) Europäisches Patentamt
European Patent Office
Office européen des brevets

(11) EP 0 678 104 B1

(12) # FASCICULE DE BREVET EUROPEEN

(45) Date de publication et mention de la délivrance du brevet:
**06.10.1999 Bulletin 1999/40**

(21) Numéro de dépôt: **95900183.5**

(22) Date de dépôt: **02.11.1994**

(51) Int Cl.6: **C08F 8/10**, C08F 8/14, C08F 8/30

(86) Numéro de dépôt international:
**PCT/FR94/01269**

(87) Numéro de publication internationale:
**WO 95/12624 (11.05.1995 Gazette 1995/20)**

(54) **EMBALLAGE AYANT DES PROPRIETES BARRIERES A L'OXYGENE**

VERPACKUNG MIT BESCHRÄNKTER SAUERSTOFFDURCHLÄSSIGKEIT

PACKAGING WITH OXYGEN BARRIER PROPERTIES

(84) Etats contractants désignés:
**DE FR GB IT**

(30) Priorité: **05.11.1993 FR 9313173**

(43) Date de publication de la demande:
**25.10.1995 Bulletin 1995/43**

(73) Titulaires:
- **ELF ATOCHEM S.A.**
**92800 Puteaux, Hauts-de-Seine (FR)**
- **SOCIETE ALSACIENNE D'ALUMINIUM Société Anonyme**
**F-74160 Saint Julien en Genevois (FR)**

(72) Inventeurs:
- **BOIRON, Guy**
**F-68920 Wintzenheim (FR)**
- **BOUILLOUX, Alain**
**F-27300 Bernay (FR)**
- **FRIEDMANN, Gilbert**
**F-67200 Strasbourg (FR)**
- **GANDON, Christophe**
**F-86220 Ingrandes (FR)**
- **STAVERIS, Stavros**
**F-67000 Strasbourg (FR)**

(56) Documents cités:

| | |
|---|---|
| DE-A- 2 012 389 | FR-A- 2 418 245 |
| GB-A- 1 013 105 | GB-A- 1 145 961 |
| US-A- 2 269 187 | US-A- 3 825 523 |

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 678 104 B1

## Description

La présente invention a pour objet un matériau d'emballage ayant des propriétés barrières à l'oxygène améliorées, en particulier à l'état humide.

Dans le domaine de la conservation des produits alimentaires, il est nécessaire d'avoir non seulement une protection contre les poussières mais également contre l'humidité, contre certains gaz tels que l'oxygène et le gaz carbonique et contre les odeurs.

Les copolymères d'éthylène/alcoolvinylique (EVOH) ainsi que les alcools polyvinyliques (APV) se sont rapidement imposés dans ce domaine comme étant les meilleurs matériaux pour le conditionnement des produits secs ou faiblement humides. Cependant ils sont mal adaptés à l'emballage d'aliments à très forte teneur en eau tels que notamment produits laitiers, jus de fruits, car les propriétés barrières à l'oxygène diminuent très rapidement pour des taux d'humidité relative supérieurs à environ 60 %.

En outre, afin d'améliorer la qualité des produits alimentaires "frais" et d'augmenter leur durée de conservation, il est nécessaire de conditionner les produits alimentaires de façon aseptique.

A cette fin de nombreux procédés existent.

On peut citer par exemple la pasteurisation et la stérilisation.

Dans ces procédés l'emballage -ou le produit alimentaire emballé- est soumis à l'action de l'eau chaude (85°C-100°C) ou à l'action de la vapeur d'eau surchauffée pendant des temps allant de quelques secondes à plusieurs heures. Dans le cas par exemple de la stérilisation la température peut atteindre 121°C voire 135°C-140°C. Ainsi, l'emballage est soumis à l'action combinée de l'eau, de la température et également à des pressions qui peuvent atteindre 3 à 4 bars.

Il s'avère que pendant ces opérations les EVOH ou les APV retiennent des molécules d'eau qui sont de nature à abaisser de façon importante les propriétés barrières ainsi que, dans une certaine mesure, à provoquer des dégradations d'ordre mécaniques.

Afin de remédier à ces inconvénients, les EVOH ou les APV sont employés sous forme d'une structure composite multicouche obtenu notamment par coextrusion avec des polyoléfines telles que les polyéthylènes, les polypropylènes ou les polyesters qui ont une imperméabilité à la vapeur d'eau élevée.

Les composites ainsi obtenus peuvent être utilisés sous différents aspects tels que films souples ou rigides, tubes, bouteilles assurant non seulement l'emballage des produits alimentaires, mais également des produits pharmaceutiques et cosmétiques.

Néanmoins, bien que l'EVOH ou l'APV, soit généralement emprisonné dans de telles structures multicouches on constate cependant après stérilisation un abaissement de leurs propriétés barrières dûes vraisemblablement à une certaine rétention d'eau.

Afin de remédier à ces inconvénients, on a proposé soit d'introduire dans le liant d'adhésion des composites multicouche contenant une ou plusieurs couches d'EVOH ou d'APV, des molécules piégeant l'eau, soit encore d'augmenter le nombre de couches du composite.

Ces solutions présentent l'inconvénient d'utiliser un outillage complexe pour le mise en forme de l'emballage.

En outre, bien que les composites obtenus possèdent des propriétés barrières présentant une certaine amélioration, celle-ci est encore insuffisante lorsque des conditions d'imperméabilité à l'oxygène élevées sont requises.

Enfin, ces solutions excluent la possibilité d'utiliser les EVOH ou les APV seuls ou sur un support unique.

On a maintenant trouvé un matériau d'emballage comprenant au moins un film à base d'un polymère comprenant (i) des motifs dérivés d'un alcool insaturé et (ii) et des motifs dérivés d'un ester vinylique et tel que la perméabilité à l'oxygène, mesurée à 23° C et 100 % d'humidité relative, est inférieure à 10 $cm^3$/24 heures $m^2$ atm.

La matériau peut être un multicouches comprenant une ou plusieurs couches de polyoléfines et un film du polymère.

De préférence, on mesure la perméabilité selon le protocole décrit par G. Friedmann, P. Sperry et J. Brossas dans Journal of Membrane Science, 65, 1992 pages 93-100.

Le matériau a été placé une semaine à 23° C dans une atmosphère à 100 % d'humidité relative.

Avantageusement, la perméabilité à l'oxygène est inférieure à 7 et de préférence comprise entre 1 et 5.

Le matériau de l'invention est tel que la perméabilité à l'oxygène à 23° C et 100 % d'humidité relative (HR) est au plus de 3 fois la perméabilité à l'oxygène à 0 % HR.

Le matériau de l'invention peut être fabriqué par les techniques habituelles telles que le coextrusion. Le film du polymère alcool insaturé / ester vinylique a en général une épaisseur entre 10 et 150 microns.

Avantageusement, le polymère comprenant (i) des motifs dérivés d'un alcool insaturé et (ii) des motifs dérivés d'un ester vinylique est un polymère comprenant :

a/ au moins un motif dérivé d'un monomère de formule

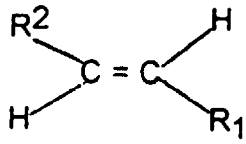

(I)

dans laquelle

$R^1$ représente un reste monovalent tel que -OH, $-CH_2OH$ ;
$R^2$ représente un atome d'hydrogène, un radical hydrocarboné aliphatique linéaire ou ramifié ayant un nombre de carbone allant de 1 à 4 ;

b/ au moins un motif dérivé d'un monomère de formule :

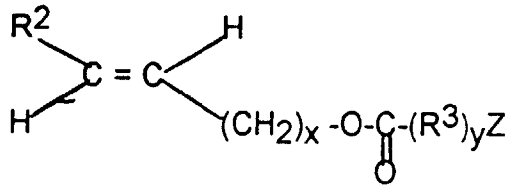

(II)

dans laquelle

$R^2$ a la même signification que dans a/,
Z représente un radical phényl non substitué ou substitué par un ou plusieurs radicaux identiques ou différents choisis parmi un radical phényle, un radical cycloalkyle ayant un nombre de carbone allant de 3 à 8, un radical hydrocarboné aliphatique linéaire ou ramifié ayant jusqu'à 10 atomes de carbone, un atome d'halogène tel que fluor, chlore ou brome, un reste $-NO_2$ et un reste -CN,
$R^3$ représente un reste divalent choisi parmi :
$-(CH_2)_w$ dans lequel w peut prendre les valeurs 0,1 ou 2, -CH = CH-,

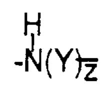

dans lequel Y représente un radical hydrocarboné aliphatique linéaire ou ramifié ayant jusqu'à 4 atomes de carbone et z peut prendre les valeurs 0 ou 1, x et y peuvent prendre les valeurs 0 ou 1 ; et éventuellement

c/ au moins un motif dérivé d'un monomère de formule

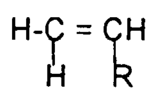

(III)

dans laquelle

R représente un atome d'hydrogène, un radical hydrocarboné aliphatique linéaire ou ramifié ayant jusqu'à 4 atomes de carbone.

Parmi les monomères de formules (I) on préfère tout particulièrement celui ou $R^2$ représente un atome d'hydrogène et $R^1$ un reste monovalent -OH.
Parmi les monomères de formule (II) on préfère ceux dans lesquels :

$R^2$ représente un atome d'hydrogène.
x et y sont égaux à zéro,
Z représente un radical phényl non substitué ou un radical phényl substitué par un radical phényle ou par un atome de fluor.

Parmi les monomères de formule (II), on préfère tout particulièrement le benzoate de vinyle et le biphényle carboxylate de vinyle.
S'agissant des monomères de formule (III), on préfère ceux dans lesquels R représente un atome d'hydrogène, un radical méthyle ou un radical éthyle.
Parmi les monomères de formule (III) on préfère utiliser :

- l'éthylène,
- le propylène,
- le butylène-1.

Parmi ces monomères, l'invention concerne tout particulièrement l'éthylène.
Le polymère selon la présente invention contient une quantité molaire dérivée d'un monomère de formule (I) au moins égale à 10 % et de préférence comprise entre 40 % et 80 % et une quantité molaire dérivée d'un monomère de formule (II) au plus égale à 90 % et de préférence comprise entre 60 % et 20 %.
Dans l'éventualité ou le polymère selon la présente invention contient des motifs dérivés d'un monomère de formule (III), ce polymère contient une quantité molaire dérivée d'un monomère de formule (III) au moins égale à 20 % et de préférence comprise entre 25 % et 50 % et des quantités molaires dérivées des monomères de formule (I) et (II) telles que leur somme est au plus égale à 80 % et de préférence comprise entre 75 % et 50 %.
Dans cette éventualité, le rapport des quantités molaires dérivées des monomères de formule (I) et (II) :
$\frac{(I)}{(II)}$ peut varier dans une large mesure. Il est au moins compris entre 0,5 et 100 et de préférence compris entre 1 et 50.
Le polymère selon la présente invention peut être obtenu par modification chimique de polymères (I) ou de copolymères (I)-(III).
Parmi les polymères (I) on préfère ceux dans lesquels
$R^2$ = H et $R^1$ = OH
Parmi les copolymères (I)-(III) on préfère ceux dans lesquels (III) représente une unité dérivée de l'éthylène (R = H) et (I) représente une unité dérivée d'alcool vinylique ($R^2$ = H et $R^1$ = OH).
Les alcools polyvinyliques (I) ou les copolymères d'éthylène/alcool vinylique (I)-(III) peuvent être obtenus respectivement par saponification ou alcoolyse partielle ou totale de polyacétates de vinyle ou de copolymères éthylène/acétate de vinyle.
Le degré de saponification ou d'alcoolyse est au moins égal en mole à 90 % et de préférence est compris entre 94 % et 99,5 %.
La proportion en moles d'éthylène dans les copolymères éthylène/alcool vinylique (I)-(III) est comprise dans l'intervalle de 20 % à 50 % et de préférence de 25 % à 50 %.
La modification chimique des polymères (I) ou des copolymères (I)-(III) selon la présente invention est réalisée par acylation ou par uréthanisation au moyen de tout composé contenant le motif

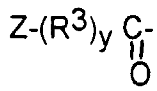

de la formule (II) et comportant une fonction susceptible de réagir avec la fonction hydroxyle des polymères (I) ou des copolymères (I)-(III).
A titre d'illustration de composés d'acylation, on peut citer les chlorures d'acide, les acides carboxyliques, leurs anhydrides ou leurs esters ou leurs amides.
De tels composés ainsi que leur préparation sont décrits dans la littérature et ne constituent pas l'objet de l'invention.
Parmi ces composés on utilisera de préférence les chlorures d'acides, les acides carboxyliques et leur anhydrides.
A titre d'exemples de chlorures d'acide on peut citer le chlorure de paraphényle benzoyle, le chlorure de cinnamoyle, le chlorure de phényl-acétyl et tout particulièrement le chlorure de benzoyle.
A titre d'exemple d'acide carboxylique on peut citer tout particulièrement l'acide benzoique, et comme anhydride, l'anhydride benzoique.
A titre d'illustration de composés d'uréthanisation, on peut citer les isocyanates tels que le phénylisocyanate et le benzylisocyanate.
La réaction d'acylation ou d'uréthanisation peut être effectuée soit en solution, soit à l'état fondu.
S'agissant de l'acylation en solution on utilisera des solvants inertes vis à vis des réactifs acylants.

De préférence on utilisera des solvants qui permettent de solubiliser à la fois les polymères (I) ou les copolymères (I)-(III) et le polymère selon l'invention.
Parmi ces solvants on peut citer :

- le formamide, le N-méthylformamide, le N,N-diméthylformamide, le N-N-diméthylacétamide, la N-méthyl pyrolidone, le diméthylsulfoxyde, la diméthylsulfone.

Ces solvants peuvent être utilisés seuls ou en mélange.
La concentration pondérale du polymère (I) ou du copolymère (I)-(III) à modifier dans ces solvants peut varier dans une large mesure. Elle est comprise entre 20 g/l et 350 g/l et, de préférence entre 50 g/l et 200 g/l.
S'agissant de l'acylation en solution on opère généralement en ajoutant progressivement l'agent acylant tel quel, ou éventuellement en solution dans l'un quelconque des solvants précédemment énumérés ou polymère (I) ou au copolymère (I)-(III) à modifier solubilisé par un ou plusieurs solvants précédemment énumérés.
Le solvant du polymère (I) ou du copolymère (I)-(III) peut être identique ou différent du solvant de l'agent acylant.
Dans le cas ou l'agent acylant est un chlorure d'acide, on opère généralement en présence d'un capteur d'acide chlorhydrique qui peut être un hydroxyde alcalin ou la pyridine. Si l'agent acylant est un acide carboxylique on opèrera en présence d'un sel tel qu'un acétate alcalin.
Selon un mode préféré de l'invention on solubilise le polymère (I) ou le copolymère (I)-(III) à chaud, à une température voisine mais inférieure à la température d'ébullition du solvant utilisé et on ajoute l'agent acylant à cette température.
Le temps de réaction peut varier dans une large mesure. Il est fonction du taux d'acylation désiré. Ce temps de réaction est au moins égal à 30 minutes et de préférence compris entre 4 et 48 heures.
Avant d'effectuer l'acylation, il est avantageux d'éliminer l'oxygène du milieu réactionnel.
A cette fin on purge le réacteur avec un gaz inerte tel que l'azote, l'argon, l'hélium.
S'agissant de l'acylation à l'état fondu, on opère généralement en introduisant l'agent acylant et le polymère (I) ou le copolymère (I)-(III) à modifier dans un appareil de malaxage assurant une bonne dispersion ou dans une extrudeuse.
A titre d'exemple d'appareils qui conviennent particulièrement bien à cet effet on citera les malaxeurs type BUSS, BRABENDER, WERNER-PFLEIDER double-vis.
La température du milieu réactionnel peut varier dans une large mesure.
Elle est au moins égale à la température de fusion du polymère (I) ou du copolymère (I)-(III) et de préférence supérieure de 20°C à 50°C à cette température de fusion.
La durée de malaxage peut également varier dans une large mesure et comme pour l'acylation en solution, dépend du taux d'acylation.
Elle est au moins égale à trente secondes et peut atteindre 1 à 2 heures.
Le polymère préparé par la méthode d'acylation en solution peut être séparé du milieu par précipitation puis purifié par tous procédés connus tels que filtration, lavage, essorage puis ensuite soumis à une opération de séchage généralement sous pression réduite.
Ainsi, le milieu réactionnel est versé dans une grande quantité de non solvant du polymère.
Le polymère précipité est recueilli, essoré et éventuellement lavé.
Puis il est purifié par redissolution dans un solvant tel que le tétrahydrofuranne puis reprécipité dans le non solvant.
Cette opération pouvant être répétée plusieurs fois.
Comme non-solvant on utilise par exemple de l'eau ou des alcools de bas poids moléculaire tels que méthanol, éthanol et n-propanol ou des mélanges eau/alcool.
Les quantités de non-solvant peuvent varier dans une large mesure. On utilise généralement un rapport volumique non-solvant/mélange réactionnel au moins égal à 4 et de préférence compris entre 8 et 12.
Dans le cas de l'acylation à l'état fondu on récupère le milieu réactionnel que l'on traite directement par un mélange eau/alcool de bas poids moléculaire.
L'insoluble est généralement essoré, lavé puis séché sous pression réduite.
Le polymère obtenu selon la présente invention se présente sous forme de poudre blanche.
Sa composition est déterminée par analyse RMN du $H^1$.
On réalise à partir des poudres des films sur lesquels on effectue notamment des mesures de perméabilité à l'oxygène à l'état humide (100 % d'humidité relative).
On constate que pour des taux d'acylation allant de quelques pour cent à plusieurs dizaines de pourcent la perméabilité à l'oxygène à l'état humide est améliorée dans un rapport qui peut atteindre 8 à 10 par rapport à l'EVOH de départ.

Le polymère de la présente invention présente l'avantage d'avoir une faible perméabilité à l'oxygène et ceci quel que soit le taux d'humidité relative.
Ils présentent également l'avantage d'avoir une très faible reprise à l'eau.
Le polymère de la présente invention est notamment applicable à la fabrication d'emballages nécessitant une faible imperméabilité à l'oxygène à l'état humide.
L'invention concerne aussi un matériau d'emballage comprenant au moins un film à base du polymère qu'on vient de décrire, c'est-à-dire le polymère qui comprend les motifs (I), (II) et éventuellement (III).
Le matériau peut être un multicouches comprenant une ou plusieurs couches de polyoléfines et un film du polymère.
Les exemples suivants illustrent l'invention.

**EXEMPLE 1**

Dans un réacteur de 1 litre muni d'une agitation, d'une prise de température, d'un réfrigérant ascendant, préalablement mis sous atmosphère d'azote, on introduit:

- 500 ml de N-méthylpyrolidone (NMP),
- 15 ml de pyridine et
- 20 g d'un copolymère éthylène/alcool vinylique (EVOH) contenant 29 % en moles de motifs dérivés de l'éthylène et 71 % en moles de motifs dérivés d'alcool vinylique commercialisé par la Société ELF-ATOCHEM S.A sous la marque SOARNOL 29D.

On porte le milieu réactionnel à 115°C puis on introduit goutte à goutte en 10 mn 20,71 ml de chlorure de benzoyle (0,1803 mole).
L'addition terminée, le milieu réactionnel est maintenu 2 heures à 115°C puis on le laisse refroidir. Le milieu réactionnel refroidi est ensuite versé dans une grande quantité d'eau (4 litres).
Le polymère précipité est recueilli par filtration.
Le polymère ainsi obtenu est purifié par redissolution dans 500 ml de tétrahydrofuranne (THF) puis reprécipitation dans l'eau.
On renouvèle deux fois cette opération.
Le polymère est ensuite séché sous pression réduite à 50°C pendant 24 heures. Il se présente sous forme d'une poudre blanche.
La composition molaire du polymère obtenu a été déterminée par RMN du $H^1$ sur un appareil BRUCKER WP® de 200 $MH_z$ dans DMSO deutéré comme solvant.
Le polymère obtenu de structure :

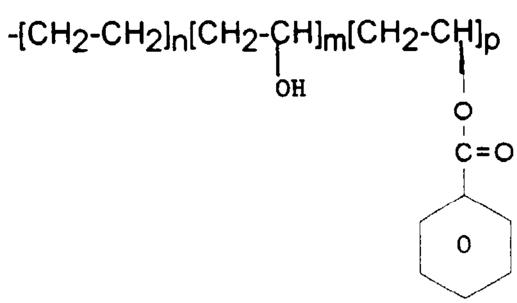

a la composition molaire suivante :
n = 29, m = 51 et p = 20
Le taux d'acylation Ta, est exprimé par la relation

$$Ta = 100\,\frac{m_{initial} - m_{modifié}}{m_{initial}} \text{ est égal à } \frac{71-51}{71} \times 100 = 28\ \%$$

**EXEMPLE 2**

Dans un réacteur de 0,5 litre muni d'une agitation, d'une prise de température, d'un réfrigérant ascendant, préalablement mis sous atmosphère d'azote, on introduit:

- 150 ml de NMP,
- 1,47 ml de pyridine et
- 10,1 g d'EVOH identique à celui de l'exemple 1.

On porte le milieu réactionnel à 115°C puis on laisse refroidir le milieu réactionnel à 20°C.
On introduit ensuite 2,1 ml de chlorure de benzoyle. L'addition terminée, le milieu réactionnel est maintenu 14 heures à 20°C, puis ensuite versé dans 2 litres d'eau.
Le polymère obtenu est purifié par redissolution dans 250 ml de THF puis reprécipitation dans l'eau. On renouvèle deux fois cette opération.
Le polymère est ensuite séché sous pression réduite à 50°C pendant 24 heures.
La composition molaire du polymère obtenu a été déterminée par RMN du $H^1$, selon les conditions de l'exemple 1.
Le polymère obtenu de structure :

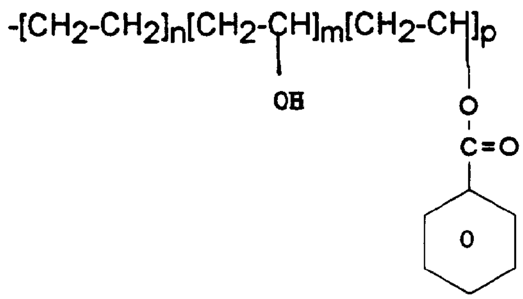

a la composition molaire suivante :
n = 29, m = 66 et p = 5
Le taux d'acylation Ta est de 7 %.

**EXEMPLE 3**

On opère comme dans l'exemple 2 excepté que l'on utilise :

- 170 ml de NMP,
- 3,75 ml de pyridine,
- 5 g d'EVOH

et que les 2,1 ml de chlorure de benzoyle sont remplacés par 12,68 g de chlorure de paraphényle benzoyle.
Le milieu réactionnel est maintenu après addition du chlorure de paraphényle benzoyle à 20°C pendant 4 heures et 30 mn.
Le polymère obtenu est précipité dans le benzène et purifié comme précédemment.
Le polymère obtenu de structure :

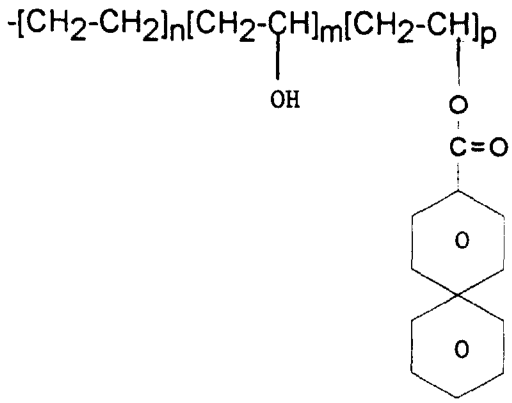

a la composition molaire suivante :
n = 29, m = 45 et p = 26.

Le taux d'acylation Ta est de 37 %.

## EXEMPLE 4

Dans un réacteur de 1 litre équipé comme dans l'exemple 1 on introduit:

- 500 ml de DMSO,
- 5,72 g d'EVOH identique à celui des exemples précédents,
- 5,72 g d'acide benzoique et
- 0,17 g d'acétate de sodium.

Le milieu réactionnel est porté à 150°C puis maintenu à cette température pendant 20 heures.

Après refroidissement, le milieu réactionnel est versé dans 1 litre d'eau et le polymère précipité est recueilli par filtration puis lavé à l'ether diéthylique.

Le polymère est ensuite séché sous pression réduite à 80°C pendant 48 heures.

Le polymère obtenu de structure :

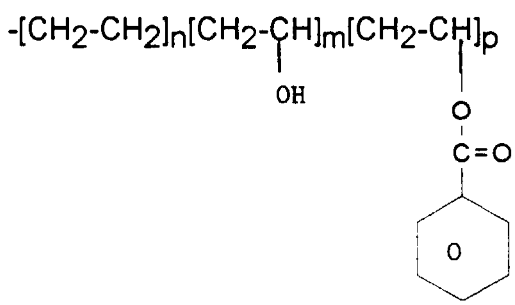

a la composition molaire suivante :
n = 29, m = 69 et p = 2.

Le taux d'acylation Ta est de 3 %.

## EXEMPLE 5

On introduit 35 g d'EVOH identique à celui des exemples précédents et 19,64 g d'anhydride benzoique dans un malaxeur type Brabender régulé à 205°C.

La vitesse de rotation des pâles est de 64 tr/mn.

La durée de malaxage à 205°C est de 20 mn puis le polymère est récupéré puis traité par une solution d'eau et de n-propanol (50/50 en volume).

Le résidu non soluble est essoré puis séché sous pression réduite à 80°C pendant 48 heures.

Le polymère obtenu de structure identique à ceux obtenus dans les exemples 1, 2 et 4 a la composition molaire suivante :

n = 29, m = 64 à 57 et p = 7 à 14.

Afin d'évaluer les propriétés physico-chimiques des polymères obtenus on réalise des films de 100 à 150 microns d'épaisseur par simple pressage à 200°C sous une pression de 150 bars desdits polymères sous forme de poudre ainsi que de l'EVOH de départ.

Sur les films obtenus on détermine :

- la température de transition vitreuse Tg,
- la température de fusion Tf,
- la reprise en eau ΔM mesurée entre 75 % et 100 % d'humidité relative (HR), et
- l'imperméabilité à l'oxygène à l'état sec -$PO_2$(O % HR)- et à l'état humide $PO_2$ (100 % HR).

Les températures Tg et Tf sont déterminées par analyse thermique différentielle sur un appareil DSC 4 de Perking Elmer.

Les films de polymères et d'EVOH subissent les différentes phases de traitement thermique ci-après :

a/ chauffage à 200°C avec une vitesse de montée en température de 50°C/mn,
b/ maintient 5 minutes à 200°C,
c/ refroidissement à 0°C avec vitesse de descente en température de 10°C/mn et
d/ chauffage à 200°C avec une vitesse de montée en température de 10°C/mn.

Les mesures de Tg et Tf sont effectuées pendant la phase d/.

La reprise en eau est effectuée par détermination de l'augmentation de poids d'échantillons placés pendant une semaine à 23°C dans des atmosphères ayant respectivement 75 % et 100 % d'humidité relative.

Si on désigne par :

$M_{75}$ la masse d'échantillon ayant séjourné une semaine à 23°C dans une atmosphère à 75 % HR, et
$M_{100}$ la masse d'échantillon ayant séjourné une semaine à 23°C dans une atmosphère à 100 % HR,

la reprise en eau ΔM, exprimée en pour cent, est donnée par la relation :

$$\Delta M = \frac{M_{100}-M_{75}}{M_{75}} X 100$$

La perméabilité à l'oxygène à l'état sec et à l'état humide sont déterminées selon le protocole décrit par G. Friedmann, P. Sperry et J. Brossas dans Journal of Membrane Science, 65, 1992 pages 93-100 dont le contenu est incorporé dans la présente demande par référence.

Les résultats des différentes mesures sont rassemblés dans le tableau ci-après :

TABLEAU

| **Caractéristique** | **Tg (°C)** | **Tf (°C)** | **ΔM (%)** | **$PO_2$ ($cm^3$/24 heures/ $m^2$/atm.)** | |
|---|---|---|---|---|---|
| Produit | | | | **(O % HR)** | **(100 % HR)** |
| EVOH(1) | 65 | 185 | 8,7 | 0,5-1,3 | 15-20 |
| polymère de l'exemple 1 | 54 | - | 2,7 | 1 | 2,5 |
| polymère de l'exemple 2 | 56 | 180 | - | - | - |
| polymère de l'exemple 3 | 64 | 182 | 4 | 2-3 | 3 |
| polymère de l'exemple 5 | 58 | - | 4,7 | - | 2-3 |

(1) Copolymère d'éthylène/alcool vinylique contenant 29 % en moles de motifs dérivés de l'éthylène et 71 % en moles de motifs dérivées d'alcool vinylique.

On constate ainsi que le polymère de l'exemple 1 présente à 0 % HR une perméabilité à l'oxygène quasiment identique à l'EVOH alors qu'à 100 % HR ce polymère est plus performant car sa perméabilité à l'oxygène n'est que de 2,5 alors que pour l'EVOH elle est de 15 à 20.

La même observation peut être faite pour le polymère de l'exemple 3.

La planche unique ci-après visualise ces résultats.

Sur cette planche : EVOH désigne un copolymère d'éthylène/alcool vinylique contenant 29 % en moles de motifs dérivés de l'éthylène et 71 % en moles de motifs dérivés d'alcool vinylique,

$T_1$ désigne le polymère de l'exemple 1,
$T_3$ désigne le polymère de l'exemple 3,
$PO_2$ désigne la perméabilité à l'oxygène en $cm^3/24$ heures/$m^2$/atm,
HR désigne l'humidité relative en %.

On constate également qu'entre 75 % et 100 % d'humidité relative, l'EVOH voit son poids augmenter de 8,7 % alors que le polymère de l'exemple 1 ne reprend que 2,7 %.

## Revendications

1. Utilisation comme matériau d'emballage d'un film à base d'un polymère comprenant (i) des motifs dérivés d'un alcool insaturé et (ii) des motifs dérivés d'un ester vinylique et telle que la perméabilité à l'oxygène, mesurée à 23°C et 100 % d'humidité relative, est inférieure à 10 $cm^3$ / 24 heures $m^2$ atm.

2. Utilisation selon la revendication 1 dans laquelle la perméabilité à l'oxygène à 23°C et 100 % d'humidité relative est au plus de 3 fois la perméabilité à 23°C et à 0 % d'humidité relative.

3. Utilisation selon la revendication 1 ou 2 dans laquelle le polymère comprenant des motifs dérivés d'un alcool insaturé et d'un ester vinylique est un polymère comprenant

a/ au moins un motif dérivé d'un monomère de formule

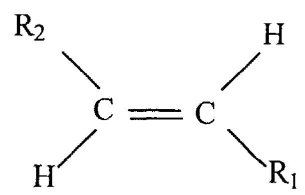

(I)

dans laquelle

$R^1$ représente un reste monovalent tel que -OH, $-CH_2OH$ ;
$R^2$ représente un atome d'hydrogène, un radical hydrocarboné aliphatique linéaire ou ramifié ayant un nombre de carbone allant de 1 à 4 ;

b/ au moins un motif dérivé d'un monomère de formule

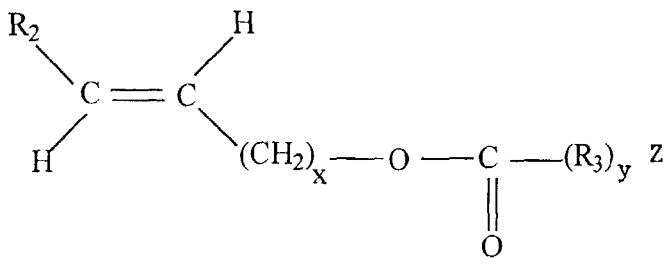

(II)

dans laquelle

$R^2$ a la même signification que dans a/,
Z représente un radical phényl non substitué ou substitué par un ou plusieurs radicaux identiques ou différents choisis parmi un radical phényl, un radical cycloalkyle ayant un nombre de carbone allant de 3 à 8, un radical hydrocarboné aliphatique linéaire ou ramifié ayant jusqu'à 10 atomes de carbone, un atome d'halogène tel que fluor, chlore ou brome, un reste $-NO_2$ et un reste -CN,
$R^3$ représente un reste divalent choisi parmi :
-(CH2)w dans lequel w peut prendre les valeurs 0,1 ou 2, -CH =CH-

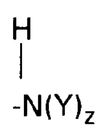

dans lequel Y représente un radical hydrocarboné aliphatique linéaire ou ramifié ayant jusqu'à 4 atomes de carbone et z peut prendre les valeurs 0 ou 1, x et y peuvent prendre les valeurs 0 ou 1 ; et éventuellement

c/ au moins un motif dérivé d'un monomère de formule

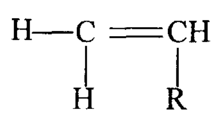

(III)

dans laquelle

R représente un atome d'hydrogène, un radical hydrocarboné aliphatique linéaire ou ramifié ayant jusqu'à 4 atomes de carbone.

**4.** Utilisation selon la revendication 3, caractérisée en ce que dans la formule (I) $R^2$ représente un atome d'hydrogène et $R^1$ représente un reste -OH.

**5.** Utilisation selon la revendication 3, caractérisée en ce que dans la formule (II) $R^2$ représente un atome d'hydrogène, x et y sont égaux à zéro et Z représente un radical phényle non substitué ou un radical phényle substitué par un radical phényle.

**6.** Utilisation selon la revendication 3, caractérisée en ce que dans la formule (III) R représente un atome d'hydrogène, un radical méthyle ou un radical éthyle.

**7.** Utilisation selon la revendication 6, caractérisée en ce que le monomère de formule (III) est l'éthylène.

**8.** Utilisation selon l'une quelconque des revendications 3 à 5, caractérisée en ce que le polymère contient une quantité molaire dérivée d'un monomère de formule (I) au moins égale à 10 % et de préférence comprise entre 40 % et 80 % et une quantité molaire dérivée d'un monomère de formule (II) au plus égale à 90 % et de préférence comprise entre 60 % et 20 %.

**9.** Utilisation selon l'une quelconque des revendications 3 à 7, caractérisée en ce que le polymère contient une quantité molaire dérivée d'un monomère de formule (III) au moins égale à 20 % et de préférence comprise entre 25 % et 50 % et des quantités molaires dérivées des monomères de formules (I) et (II) telle que leur somme est au plus égale à 80 % et de préférence comprise entre 75 % et 50 %.

**10.** Utilisation selon l'une des revendications 1 à 9 caractérisée en ce que le matériau comprend aussi une ou plusieurs couches de polyoléfines.

**11.** Emballage comprenant au moins un film à base d'un polymère selon l'une quelconque des revendications 1 à 9.

**Patentansprüche**

**1.** Verwendung als Verpackungsmaterial eines Films auf der Basis eines Polymers, das (i) Einheiten, die von einem ungesättigten Alkohol abstammen, und (ii) Einheiten, die von einem Vinylester abstammen, enthält und das eine Sauerstoffdurchlässigkeit, die bei 23 °C und 100 % relativer Feuchtigkeit gemessen wird, unter 10 $cm^3/24\ h\ m^2$ atm aufweist.

**2.** Verwendung nach Anspruch 1, wobei die Sauerstoffdurchlässigkeit bei 23 °C und 100 % relativer Feuchtigkeit höchstens dreimal so groß ist wie die Durchlässigkeit bei 23 °C und 0 % relativer Feuchtigkeit.

**3.** Verwendung nach Anspruch 1 oder 2, wobei das Polymer, das Einheiten, die von einem ungesättigten Alkohol abstammen, und Einheiten, die von einem Vinylester abstammen, enthält, ein Polymer ist, das enthält:

a) mindestens eine Einheit, die von einem Monomer der Formel

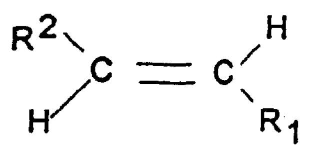

(I)

abstammt, in der bedeuten:

- $R^1$ einen einwertigen Rest, wie z.B. -OH, $CH_2OH$;
- $R^2$ ein Wasserstoffatom, einen geradkettigen oder verzweigten Kohlenwasserstoffrest mit 1 bis 4 Kohlenstoffatomen;

b) mindestens eine Einheit, die von einem Monomer der Formel

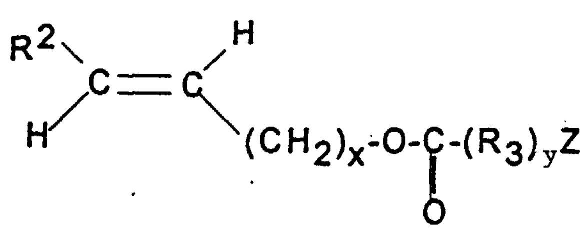

(II)

abstammt, in der bedeuten:

- $R^2$ dasselbe wie unter a) angegeben,

- Z einen nicht substituierten Phenylrest oder einen Phenylrest, der mit einem oder mehreren gleichen oder verschiedenen Resten substituiert ist, die unter Phenyl, Cycloalkyl mit 3 bis 8 Kohlenstoffatomen, geradkettigen oder verzweigten Kohlenwasserstoffresten mit bis zu 10 Kohlenstoffatomen, Halogenen, wie z. B. Fluor, Chlor und Brom, dem Rest $-NO_2$ und dem Rest -CN ausgewählt sind.
- $R^3$ eine zweiwertige Gruppe, die ausgewählt ist unter $-(CH_2)_w-$, worin w den Wert 0, 1 oder 2 haben kann, -CH=CH-,

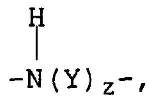

  worin Y einen geradkettige oder verzweigten aliphatischen Kohlenwasserstoffrest mit bis zu 4 Kohlenstoffatomen darstellt und z den Wert 0 oder 1 haben kann,
- x und y den Wert 0 oder 1,

und gegebenenfalls
c) mindestens eine Einheit, die von einem Monomer der Formel

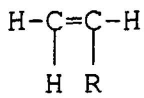

(III)

abstammt, in der R Wasserstoff, einen geradkettigen oder verzweigten Kohlenwasserstoffrest mit bis zu 4 Kohlenstoffatomen darstellt.

**4.** Verwendung nach Anspruch 3, dadurch gekennzeichnet, daß in Formel (I) $R^2$ Wasserstoff und $R^1$ den Rest -OH darstellt.

**5.** Verwendung nach Anspruch 3, dadurch gekennzeichnet, daß in Formel (II) $R^2$ Wasserstoff bedeutet, x und y gleich Null sind und Z einen nicht substituierten Phenylrest oder einen Phenylrest, der mit Phenyl substituiert ist, darstellt.

**6.** Verwendung nach Anspruch 3, dadurch gekennzeichnet, daß der Rest R in Formel (III) Wasserstoff, Methyl oder Ethyl bedeutet.

**7.** Verwendung nach Anspruch 6, dadurch gekennzeichnet, daß es sich bei dem Monomer der Formel (III) um Ethylen handelt.

**8.** Verwendung nach einem der Ansprüche 3 bis 5, dadurch gekennzeichnet, daß das Polymer mindestens 10 Mol-% und vorzugsweise 40 bis 80 Mol-% Einheiten, die von einem Monomer der Formel (I) abstammen, und höchstens 90 Mol-% und vorzugsweise 60 bis 20 Mol-% Einheiten, die von einem Monomer der Formel (II) abstammen, enthält.

**9.** Verwendung nach einem der Ansprüche 3 bis 7, dadurch gekennzeichnet, daß das Polymer mindestens 20 Mol-% und vorzugsweise 25 bis 50 Mol-% Einheiten, die von einem Monomer der Formel (III) abstammen, und Einheiten der Formeln (I) und (II) in einer solchen Menge enthält, daß ihre Summe höchstens 80 Mol-% und vorzugsweise 75 bis 50 Mol-% entspricht.

**10.** Verwendung nach einem der Ansprüche 1 bis 9, dadurch gekennzeichnet, daß das Material außerdem eine oder mehrere Schichten aus Polyolefinen enthält.

**11.** Verpackung, die mindestens einen Film auf der Basis eines Polymers nach einem der Ansprüche 1 bis 9 enthält.

## Claims

**1.** Use as wrapping material of one film based on a polymer comprising (i) units derived from an unsaturated alcohol

and (ii) units derived from a vinyl ester, and such that the permeability to oxygen, measured at 23°C and 100% relative humidity, is less than 10 $cm^3$/24 hours $m^2$·atm.

2. Use according to Claim 1, in which the permeability to oxygen at 23°C and 100% relative humidity is not more than 3 times the permeability at 23°C and 0% relative humidity.

3. Use according to Claim 1 or 2, in which the polymer comprising units derived from an unsaturated alcohol and from a vinyl ester is a polymer comprising

a) at least one unit derived from a monomer of formula

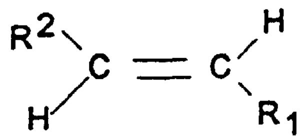

(I)

in which

$R^1$ represents a monovalent residue such as -OH or $-CH_2OH$;
$R^2$ represents a hydrogen atom or a linear or branched aliphatic hydrocarbon-based radical having a carbon number ranging from 1 to 4;

b) at least one unit derived from a monomer of formula:

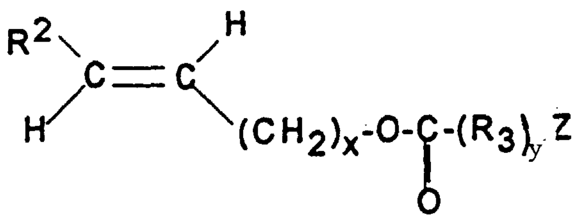

(II)

in which

$R^2$ has the same meaning as in a),
Z represents a phenyl radical which is unsubstituted or substituted with one or more radicals, which may be identical or different, chosen from a phenyl radical, a cycloalkyl radical having a carbon number ranging from 3 to 8, a linear or branched aliphatic hydrocarbon-based radical containing up to 10 carbon atoms, a halogen atom such as fluorine, chlorine or bromine, an $-NO_2$ residue and a -CN residue,
$R^3$ represents a divalent residue chosen from:
$-(CH_2)_w$ in which w can take the values 0, 1 or 2, or

H
$-CH{=}CH{-}N(Y)_z$

in which Y represents a linear or branched aliphatic hydrocarbon-based radical containing up to 4 carbon atoms and z can take the values 0 or 1, x and y can take the values 0 or 2; and optionally

c) at least one unit derived from a monomer of formula

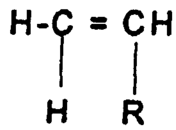

(III)

in which

R represents a hydrogen atom or a linear or branched aliphatic hydrocarbon-based radical containing up to 4 carbon atoms.

**4.** Use according to Claim 3, characterized in that, in formula (I), $R^2$ represents a hydrogen atom and $R^1$ represents an -OH residue.

**5.** Use according to Claim 3, characterized in that, in formula (II ), $R^2$ represents a hydrogen atom, x and y are equal to zero and Z represents an unsubstituted phenyl radical or a phenyl radical substituted with a phenyl radical.

**6.** Use according to Claim 3, characterized in that, in formula (III), R represents a hydrogen atom, a methyl radical or an ethyl radical.

**7.** Use according to Claim 6, characterized in that the monomer of formula (III) is ethylene.

**8.** Use according to any one of Claims 3 to 5, characterized in that the polymer contains a molar amount derived from a monomer of formula (I) at least equal to 10% and preferably between 40% and 80% and a molar amount derived from a monomer of formula (II) of not more than 90% and preferably between 60% and 20%.

**9.** Use according to any one of Claims 3 to 7, characterized in that the polymer contains a molar amount derived from a monomer of formula (III) at least equal to 20% and preferably between 25% and 50%, and molar amounts derived from monomers of formulae (I) and (II ) such that their sum is not more than 80% and preferably between 75% and 50%.

**10.** Use according to one of Claims 1 to 9, characterized in that the material also comprises one or more layers of polyolefins.

**11.** Wrapping comprising at least one film based on a polymer according to any one of Claims 1 to 9.

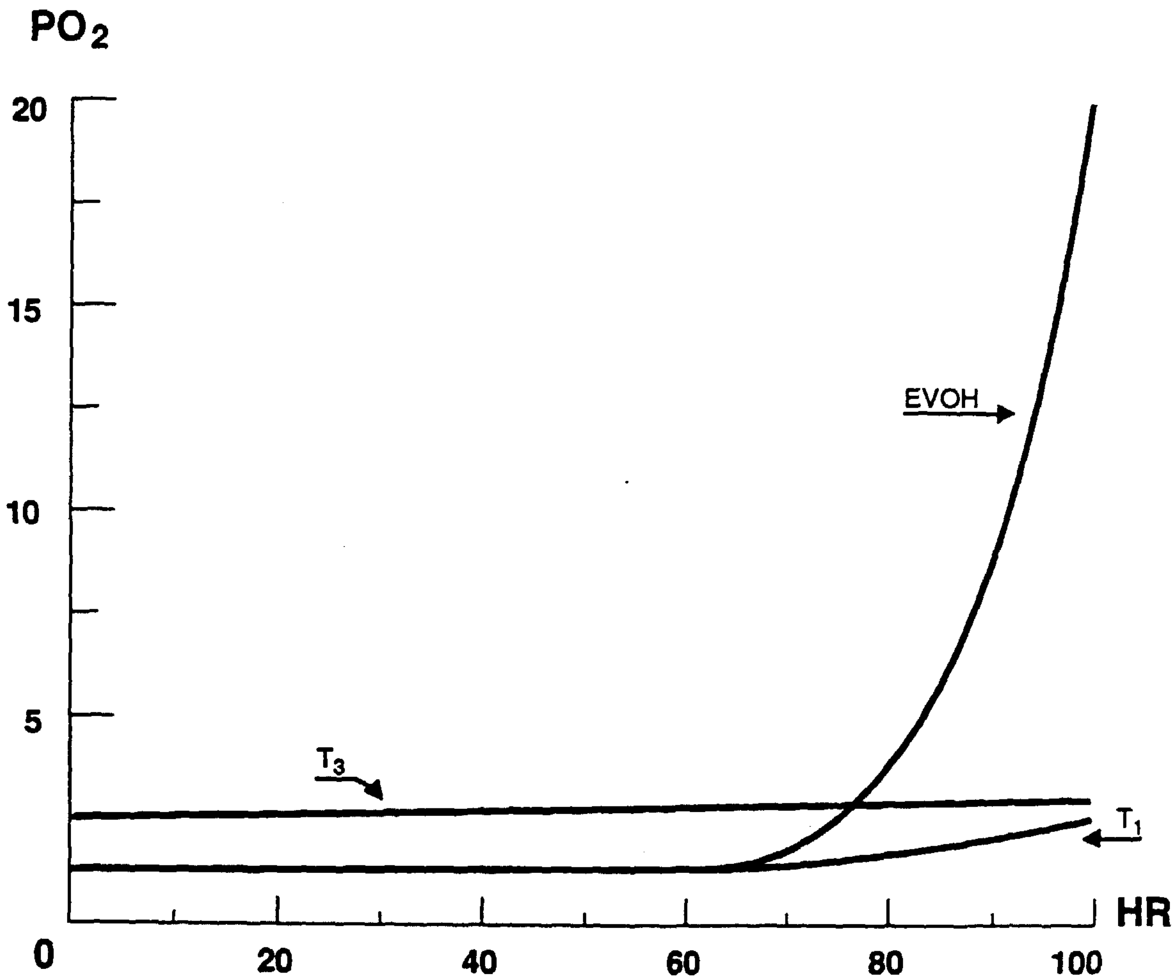


FIG. 1